# EUROPEAN PATENT SPECIFICATION

(11) **EP 2 095 940 B1**
(45) Date of publication and mention of the grant of the patent: **28.09.2011**
(21) Application number: 09002366.4
(22) Date of filing: 19.02.2009
(51) Int. Cl.: B32B 15/01, F16C 33/12

(54) **Sliding member**
Gleitelement
Élément coulissant

(30) Priority: 27.02.2008 JP 2008045490
(43) Date of publication of application: 02.09.2009
(73) Proprietor: Daido Metal Company Ltd., Nagoya-shi, Aichi 460-0008 (JP); Honda Motor Co., Ltd., Minato-ku Tokyo 107-8556 (JP)
(72) Inventor: Fujita, Masahito, Inuyama-shi Aichi 484-0061 (JP); Tsuji, Hideo, Inuyama-shi Aichi 484-0061 (JP); Zushi, Kouji, Inuyama-shi Aichi 484-0061 (JP); Sakurai, Tasuku, Saitama 351-0193 (JP); Shiraishi, Takashi, Saitama 351-0193 (JP); Arimura, Mitsunori, Saitama 351-0193 (JP)
(74) Representative: Böhm, Brigitte

(56) References cited:
- DE-A1- 3 619 881
- GB-A- 2 355 016
- GB-A- 2 359 563
- JP-A- 11 050 296
- US-B1- 6 303 235

## Description

### BACKGROUND OF THE INVENTION

### Technical Field

The present invention relates to a sliding member, which may be suitably used for slide bearings and bushes provided to engines, for example.

### Background Art

In order to increase the output from engines of automobiles, a plate-shaped bearing metal, in which a copper alloy layer is formed on a backing metal made of a low-carbon steel, is often used for a slide bearing incorporated into a crankshaft, a connecting rod, and the like. The copper alloy layer has superior sliding characteristics such as an initial fitting characteristic and an anti-seizing characteristic with respect to a shaft of a facing member, and a fatigue resistance. In general, the copper alloy layer includes a second phase composition, such as Bi and Pb, as a solid lubricant.

A prior art bearing is shown in GB-A-2 359 563.

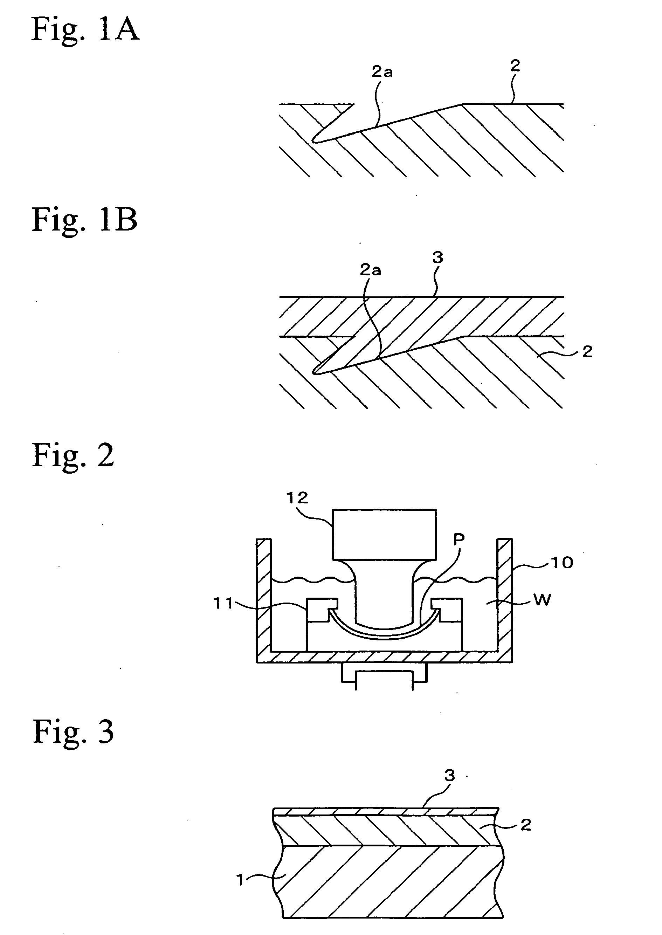

In this kind of the bearing metal, as shown in Fig. 3, a copper alloy layer 2 is formed on a backing metal 1, and there may be a case of forming a thin metal layer, called an overlay layer 3, on the copper alloy layer 2 mostly by plating. According to a bearing metal having a structure of three layers, a shaft slides on the overlay layer, and the sliding characteristics, specifically, the fitting characteristic and the anti-seizing characteristic are improved.

The composition of the overlay layer is similar to the second phase composition, and Bi, Pb, or an alloy primarily made of Bi or Pb may be used. A Ni-plated layer, several micrometers thick, may be formed on the overlay layer in order to further stabilize the surface of the overlay layer. Recently, an overlay layer may be made of a material in which molybdenum disulfide is mixed into a PAI (polyamide-imide) resin. Any overlay layer is required to have a large bonding strength with respect to the copper alloy layer of a base.

A bearing metal having an overlay layer made of Bi alloy primarily made of Bi is disclosed in Japanese Patent Application Laid-Open No. 11-50296, for example. In the invention disclosed in Japanese Patent Application Laid-Open No. 11-50296, a base made of a Cu-Sn alloy does not include a second phase composition, whereby the base may seize a shaft when the overlay layer is worn and the base is exposed. Accordingly, in such a bearing metal, a means for preventing seizing by adding a lubricating composition in the base is necessary. An example of adding Bi into a copper alloy layer of a base is disclosed in Japanese Patent No. 3421724, and this base has a superior anti-seizing characteristic.

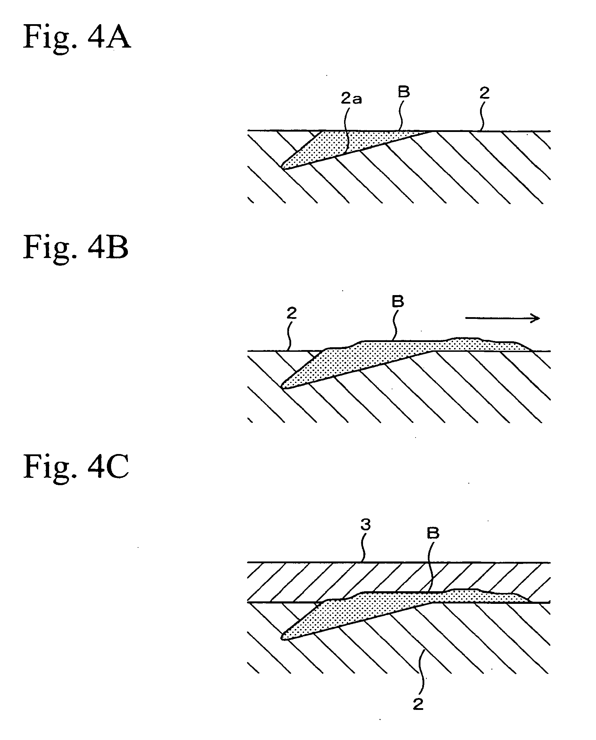

In forming an overlay layer on a copper alloy layer, in general, a surface of the copper alloy layer is machined and is flat finished so as to have a roughness of certain degree or less, and then an overlay layer is plated on the finished surface. In this case, when the surface of the copper alloy layer is machined, a composition B of a relatively soft second phase, which is included in the copper alloy layer 2 and is exposed at the surface as shown in Fig. 4A, is spread by a cutting tool as shown in Fig. 4B, whereby the composition B of the second phase thinly adheres to the surface of the copper alloy layer 2. The composition B of the second phase is dispersed in the copper alloy layer 2 in a particle state that is not solid solved, and the composition B of the second phase is exposed at the surface. Fig. 4B shows an arrow indicating a cutting direction to which a cutting tool moves.

In a condition in which the composition B of the second phase is spread over the surface of the copper alloy layer 2, when an overlay layer 3 is formed as shown in Fig. 4C, the composition B of the second phase exists in an interface between the copper alloy layer 2 and the overlay layer 3. The overlay layer 3 basically does not have a large bonding strength with respect to the composition B of the second phase. Therefore, when the composition B of the second phase is spread over the surface of the copper alloy layer 2 by machining, and the area of the composition B of the second phase at the interface is increased, the rate of insufficient bonding strength is increased as the area is increased. If an overlay layer with portions having insufficient bonding strength in this manner is included, the overlay layer easily detaches from the copper alloy layer. Specifically, in hard conditions such as high temperature and high surface pressure, which occur in a recent high-powered engine, the overlay layer easily comes off by tangential force of a surface of a shaft that slides and rotates at high speed, whereby seizing may occur.

### SUMMARY OF THE INVENTION

An object of the present invention is to provide a sliding member with an overlay layer in which a bonding strength with respect to a copper alloy layer including a second phase composition is greatly improved. The sliding member is superior in a fitting characteristic and is specifically superior in an anti-seizing characteristic and a fatigue resistance.

The present invention provides a sliding member having an overlay layer formed on a copper alloy layer including a second phase composition. The copper alloy layer and the overlay layer have an interface therebetween, and the second phase composition is included in the copper alloy layer except the interface.

According to the present invention, the second phase composition, which does not have a sufficient bonding strength with respect to the overlay layer, does not exist in the interface between the copper alloy layer and the overlay layer. Therefore, the entirety of the bonded surface of the overlay layer with respect to the copper alloy layer is bonded to only a matrix of the copper alloy layer. Accordingly, the bonding strength of the overlay layer with respect to the copper alloy layer including the second phase composition is further improved, whereby the sliding member has a superior anti-seizing characteristic and a superior fatigue resistance.

In order to obtain an interface between the copper alloy layer and the overlay layer, which does not include the second phase composition, the following may be exemplified. The copper alloy layer is electrolyzed in a step of acid pickling of a pretreatment of plating and is then ultrasonically cleaned in a step of water washing, before an overlay layer is formed on the copper alloy layer by plating, whereby the composition B of the second phase shown in Fig. 4A detaches from the surface of the copper alloy layer 2. The second phase composition is removed from the surface of the copper alloy layer in such a manner, and then an overlay layer is formed on the surface of the copper alloy layer, whereby an interface between the copper alloy layer and the overlay layer, which does not include the second phase composition, is obtained.

A concave portion (indicated by reference numeral 2a in Fig. 4A), in which the second phase composition was contained, appears at the surface of the copper alloy layer, from which the second phase composition was removed. A plated composition of the overlay layer fills the concave portion, thereby obtaining a so-called "anchor effect". Accordingly, the bonding strength of the overlay layer with respect to the copper alloy layer is secondarily further improved.

The second phase composition, which is included in the copper alloy layer and is not solid solved, is dispersed in a particle state in the copper alloy layer without being exposed at the interface between the copper alloy layer and the overlay layer. When the overlay layer is worn and the copper alloy layer of the base is exposed, a facing member slides on the exposed surface, and then the second phase composition in the copper alloy layer appears at the surface. The facing member slides on the second phase composition at the surface, whereby sliding characteristics are securely obtained. As the second phase composition included in the copper alloy layer in the present invention, Bi or Pb may be mentioned.

When the content of the second phase composition in the copper alloy layer is less than 1 mass %, the anti-seizing characteristic is not reliably obtained under conditions in which the overlay layer is worn and the copper alloy layer is exposed. When the content of the second phase composition is greater than 20 mass %, the strength of the copper alloy layer is decreased. Therefore, the content of the second phase composition in the copper alloy layer is preferably in a range of 1 to 20 mass %.

According to the sliding member of the present invention, the second phase composition included in the copper alloy layer does not exist at the interface between the copper alloy layer of the base and the overlay layer. Therefore, the bonding strength of the overlay layer with respect to the copper alloy layer is greatly improved, whereby a superior anti-seizing characteristic and a superior fatigue resistance are obtained.

### BRIEF DESCRIPTION OF THE DRAWINGS

Figs. 1A and 1B are sectional views of a copper alloy layer of a sliding member relating to an embodiment of the present invention.
Fig. 2 is a sectional view of a sliding member relating to an embodiment.
Fig. 3 is a sectional view showing a bearing metal having a three-layered structure including an overlay layer.
Figs. 4A to 4C are sectional views showing conventional production steps of a sliding member.

### PREFERRED EMBODIMENT OF THE PRESENT INVENTION

Hereinafter, an embodiment of the present invention is described with reference to the figures.

Fig. 1A shows a condition in which a composition B of a second phase exposed at a surface of a copper alloy layer 2 shown in Fig. 4A is removed and the surface has a concave portion 2a. As shown in Fig. 1B, an overlay layer 3 made of Bi, Pb, or an alloy primarily made of Bi or Pb is formed on the surface of the copper alloy layer 2 by plating. The copper alloy layer 2 is formed on a surface of a backing metal (not shown in the figures), thereby forming a bearing metal (sliding member) having three layers in which the overlay layer 3 and the copper alloy layer 2 are laminated on the backing metal.

A plate-shaped backing metal having a surface formed with the copper alloy layer 2 is formed into a semicircular shape so that the copper alloy layer 2 is at the side of an inner circumferential surface by pressing. Then, the overlay layer 3 is formed on the copper alloy layer 2, whereby a bearing metal is obtained. In this bearing metal, a shaft of a facing member rotates and slides on the overlay layer 3.

The copper alloy layer 2 for a bearing metal, which is a base of the overlay layer 3, is formed on a backing metal made of a low-carbon steel so as to have an appropriate thickness. The copper alloy layer 2 is suitably formed on the backing metal by sintering method, in which a copper alloy powder is spread on the backing metal and the backing metal and the copper alloy powder are diffusion bonded by heating to high temperature.

As the composition of the copper alloy layer 2, for example, Cu-Bi-Sn or Cu-Pb-Sn may be mentioned. For the overlay layer 3, as described above, Bi, Pb, a Bi-Sn alloy primarily made of Bi, or a Pb-Sn alloy primarily made of Pb may be used. The total thickness of the copper alloy layer 2 and the overlay layer 3 may be approximately 300 µm, for example, and the overlay layer 3 may have a thickness of approximately 10 µm, for example.

Particles of Bi or Pb, which do not solid solve, are dispersed in the copper alloy layer 2 at 1 to 20 mass % as the second phase composition. The surface of the copper alloy layer 2 is machined and is flat finished after the copper alloy layer 2 is formed into a shape of a bearing metal, and then an overlay layer 3 is formed thereon. In this case, a pretreatment of plating and a treatment of removing the second phase composition exposed at the surface of the copper alloy layer 2 are performed before the formation of the overlay layer 3 and after the machining.

In the pretreatment of the plating, the steps of solvent degreasing, water washing, alkali electrolytic degreasing, and water washing are performed in this order. The treatment of removing the second phase composition is performed by electrolytic pickling as pickling and subsequent ultrasonic water washing, after the pretreatment of the plating. By performing surface treatments in such a manner, the second phase composition is removed from the surface of the copper alloy layer 2 as shown in Fig. 1A, and a concave portion 2a, in which the second phase composition is contained, appears at the surface. Then, an overlay layer 3 is formed on the surface of the copper alloy layer 2 by electroplating, whereby a bearing metal is obtained.

In this bearing metal, as shown in Fig. 1B, the second phase composition included in the copper alloy layer 2 does not exist at the interface between the copper alloy layer 2 and the overlay layer 3. Therefore, the entirety of the bonding surface of the overlay layer 3 with respect to the copper alloy layer 2 is bonded to only the matrix of the copper alloy layer 2. The second phase composition is a composition that may decrease the bonding strength of the overlay layer 3 with respect to the copper alloy layer 2, and the overlay layer 3 is not bonded to the second phase composition in this embodiment. Therefore, the bonding strength of the overlay layer 3 with respect to the copper alloy layer 2 including the second phase composition is greatly improved, whereby a superior anti-seizing characteristic and a superior fatigue resistance are obtained. Since a shaft rotates and slides on the overlay layer 3, a fitting characteristic that a baring metal is expected to have is reliably obtained.

The concave portion 2a, in which the second phase composition was contained, appears at the surface of the copper alloy layer 2, from which the second phase composition was removed, and a plated composition of the overlay layer 3 fills the concave portion 2a, whereby an anchor effect is obtained. Therefore, the bonding strength of the overlay layer 3 with respect to the copper alloy layer 2 is secondarily further improved.

A method of removing the second phase composition exposed at the surface of the copper alloy layer 2 after machining of the copper alloy layer 2, is not limited to the treatment of electrolytic pickling and subsequent ultrasonic water washing, and any method which can remove the second phase composition may be used.

### PRACTICAL EXAMPLE

The effects of the present invention are demonstrated by showing results of experiments performed as practical examples.

### Practical Example 1

A copper alloy layer made of a Cu-Bi-Sn alloy was formed on a surface of a backing metal, which was made of a low-carbon steel, by sintering, and the backing metal was formed in a semicircular shape by pressing so that the copper alloy layer was at the side of an inner circumferential surface. Then, the surface of the copper alloy layer was machined and was flat finished, and the surface of the copper alloy layer was subjected to a pretreatment of plating by solvent degreasing, water washing, alkali electrolytic degreasing, and water washing, in this order. Next, the surface of the copper alloy layer was subjected to a treatment of removing the second phase composition by electrolytic pickling and ultrasonic water washing. Then, an overlay layer was formed by plating Bi on the copper alloy layer, and a three-layered structure was thereby formed, whereby test specimens of a bearing metal of a practical example 1 were obtained.

### Practical Example 2

Test specimens of a bearing metal of Practical Example 2 were obtained in the same manner as in the Practical Example 1, except that the copper alloy layer was made of a Cu-Pb-Sn alloy and the composition of the overlay layer was Pb.

### Comparative Example 1

Test specimens of a bearing metal of Comparative Example 1 were obtained in the same manner as in the Practical Example 1, except that the treatment for removing the second phase composition was not performed on the surface of the copper alloy layer.

### Comparative Example 2

Test specimens of a bearing metal of Comparative Example 2 were obtained in the same manner as in the Practical Example 2, except that the treatment for removing the second phase composition was not performed on the surface of the copper alloy layer.

The following experiments were performed on the above test specimens of the Practical Examples 1 and 2 and the Comparative Examples 1 and 2.

### (1) Bonding strength test

As shown in Fig. 2, a holder 11 was placed on the bottom of a container 10 filled with water, and a test specimen P was held by the holder 11 so that the inner circumferential surface formed with the overlay layer faced upward. Then, a horn 12 was immersed in the water W, and a top of the horn 12 was brought close to the overlay layer so that the distance therebetween was 0.5 mm, and ultrasonic waves of 19000 Hz were generated by the horn 12. The ultrasonic waves were generated for 3 minutes, and the vibrations of the ultrasonic waves were applied to the overlay layer, whereby whether the overlay layer detached from the copper alloy layer of the base or not was investigated.

### (2) Seizing test

A pair of the test specimens was inserted into a cylindrical baring member so as to form a bearing, and a shaft made of a medium-carbon steel S48C was inserted into the bearing. Then, the shaft was rotated at a circumferential speed of 20 m/sec while a lubricant, at approximately 100 °C, was supplied to the bearing at 500 cc/min. The shaft was rotated until seizing occurred, while radial load was increased by 5 MPa in each 10-minute interval, and a maximum surface pressure just before seizing was measured and was compared.

### (3) Test results

In the bonding strength test, the overlay layers of the test specimens of the Practical Examples 1 and 2 did not detach to a significant extent, and it was confirmed that the bearing metals of the Practical Examples 1 and 2 can be applied in practical use. On the other hand, the overlay layers of the test specimens of the Comparative Examples 1 and 2 did detach to a significant extent, and it was confirmed that the bearing metals of the Comparative Examples 1 and 2 are insufficient in practical use. In the seizing test, when the Practical Examples 1 and 2 were compared with the Comparative Examples 1 and 2, the maximum surface pressures of the Practical Examples, at which seizing does not occur, were improved by 24 % from those of the Comparative Examples. According to these results, the bonding strength obtained by the present invention was greatly improved compared to that in conventional cases.

The sliding member of the present invention may be suitably used for slide bearings incorporated into crankshafts and connecting rods for automobile engines.

A sliding member comprises an overlay layer that is formed on a copper alloy layer including a second phase composition. The copper alloy layer and the overlay layer have an interface therebetween, and the second phase composition is included in the copper alloy layer except the interface.

## Claims

1. A sliding member comprising an overlay layer that is formed on a copper alloy layer,
wherein the copper alloy layer and the overlay layer have an interface therebetween,
the sliding member is **characterized in that** the copper alloy layer has been including a second phase composition, the second phase composition in the interface being removed therefrom so as to form concaves,
and a material of the overlay layer being filled in the concaves.

2. The sliding member according to claim 1, wherein the second phase composition is one of Bi and Pb.

3. The sliding member according to claim 1 or 2, wherein the second phase composition is included in the copper alloy layer at 1 to 20 mass %.

4. The sliding member according to one of claims 1 to 3, wherein the overlay layer is composed of one of Bi, Pb, Bi-Sn alloy primarily made of Bi, and a Pb-Sn alloy primarily made of Pb.

## Patentansprüche

1. Gleitelement, umfassend eine Überzugschicht, die auf einer Kupferlegierungsschicht ausgebildet ist,
worin sich zwischen der Kupferlegierungsschicht und der Überzugschicht eine Grenzschicht befindet,
wobei das Gleitelement **dadurch gekennzeichnet ist, dass** die Kupferlegierungsschicht eine zweite-Phase-Zusammensetzung enthalten hatte, die zweite-Phase-Zusammensetzung in der Zwischenschicht entfernt wurde um so Konkaven auszubilden und Material der Überzugschicht in die Konkaven eingefüllt wurde.

2. Gleitelement nach Anspruch 1, worin die zweite-Phase-Zusammensetzung Bi oder Pb ist.

3. Gleitelement nach Anspruch 1 oder 2, worin die zweite-Phase-Zusammensetzung in der Kupferlegierungsschicht zu 1 bis 20 Gew.% enthalten ist.

4. Gleitelement nach einem der Ansprüche 1 bis 3, worin die Überzugschicht aus Bi, Pb, einer Bi-Sn-Legierung aus hauptsächlich Bi oder einer Pb-Sn Legierung aus hauptsächlich Pb zusammengesetzt ist.

## Revendications

1. Organe coulissant comprenant une couche de recouvrement qui est formée sur une couche en alliage de cuivre,
dans lequel la couche en alliage de cuivre et la couche de recouvrement ont une interface entre elles,
l'organe coulissant est **caractérisé en ce que** la couche en alliage de cuivre comporte une composition de seconde phase, la composition de seconde phase dans l'interface étant éliminée de celle-ci de façon à former des concavités,
et un matériau de la couche de recouvrement est chargé dans les concavités.

2. Organe coulissant selon la revendication 1, dans lequel la composition de seconde phase est une composition de Bi et Pb.

3. Organe coulissant selon la revendication 1 ou 2, dans lequel la couche en alliage de cuivre comprend de 1 à 20 % en masse de la composition de seconde phase.

4. Organe coulissant selon l'une des revendications 1 à 3, dans lequel la couche de recouvrement est composée d'un élément parmi Bi, Pb, un alliage de Bi-Sn comprenant principalement du Bi, et un alliage de Pb-Sn comprenant principalement du Pb.
